# FASCICULE DE BREVET EUROPEEN

(11) **EP 4 019 798 B1**
(45) Date de publication et mention de la délivrance du brevet: **25.10.2023**
(21) Numéro de dépôt: 21216504.7
(22) Date de dépôt: 21.12.2021
(51) Int. Cl.: F16D 65/14, B60T 13/74

(54) **ACTIONNEUR ELECTROMECANIQUE COMPORTANT UN ELEMENT D'OSSATURE**
ELEKTROMECHANISCHES STELLGLIED MIT EINEM GERÜSTELEMENT
ELECTROMECHANICAL ACTUATOR COMPRISING A FRAME ELEMENT

(30) Priorité: 23.12.2020 FR 2013998
(43) Date de publication de la demande: 29.06.2022
(73) Titulaire: Foundation Brakes France, 93700 Drancy (FR)
(72) Inventeur: MOUMANE, Mehdi, 93700 DRANCY (FR); DE CHAMPEAUX, Benoit, 93300 AUBERVILLIERS (FR); BERTRAND, Jerôme, 93230 ROMAINVILLE (FR)
(74) Mandataire: Brevalex

(56) Documents cités:
- DE-A1-102010 032 053
- DE-A1-102019 204 181
- KR-A- 20200 094 379
- KR-B1- 101 612 677
- US-A1- 2017 314 628

## Description

### DOMAINE TECHNIQUE

La présente invention se rapporte au domaine général des freins à disque de véhicule automobile, et concerne plus particulièrement un frein à disque de véhicule automobile de type électromécanique, c'est-à-dire comprenant un actionneur électromécanique pour presser une ou plusieurs plaquettes de frein contre le disque afin de générer le freinage. Plus précisément, l'invention se rapporte à un actionneur électromécanique pour étrier de frein à disque de véhicule automobile comprenant des éléments d'ossature permettant de positionner les éléments mobiles de l'ensemble de motorisation les uns par rapport aux autres indépendamment du boitier logeant ces éléments mobiles.

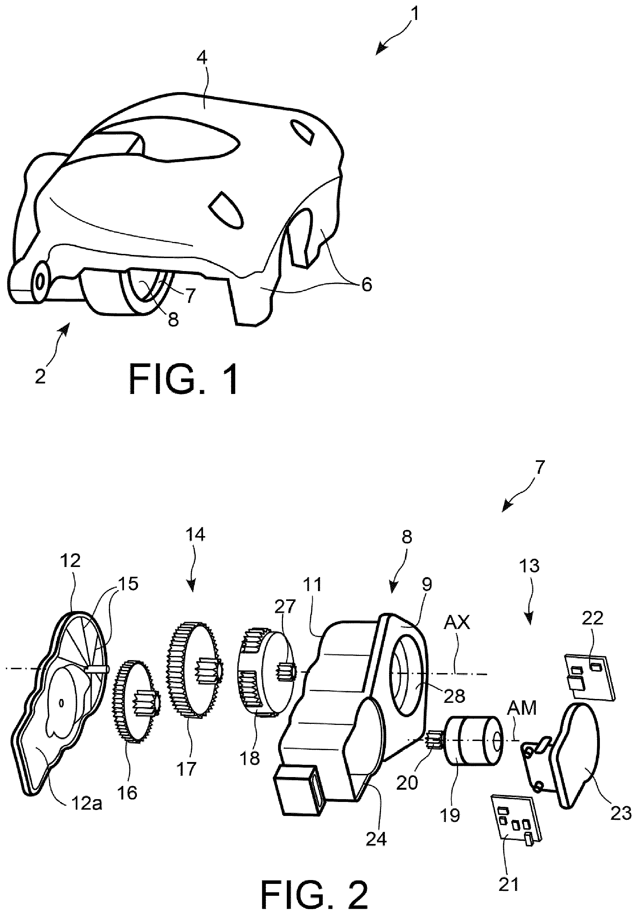

En référence à la figure 1, on a représenté, en perspective, un exemple de corps d'étrier 1 de frein à disque électromécanique susceptible d'être asservi à un actionneur selon l'invention. L'étrier 1 comporte avantageusement des moyens hydrauliques assurant le freinage de service, l'actionneur selon l'invention assurant le freinage de parking et/ou de secours. Par ailleurs, la figure 2 représente, selon une vue éclatée, un exemple d'actionneur électromécanique 7 de type connu.

Comme visible sur la figure 1, le corps d'étrier 1 comporte une base 2 prolongée par une voûte 4, elle-même prolongée par des doigts 6. La base 2 comporte un logement dans lequel est engagé un piston mobile pour presser une plaquette de frein non représentée sur un disque de freinage. Cette base 2 renferme encore dans la région arrière du piston un mécanisme de transformation de mouvement à liaison hélicoïdale, pour convertir un mouvement de rotation en un mouvement de translation du piston, ce qui correspond à convertir un moment de forces en un effort presseur.

Ce corps d'étrier 1 est en outre équipé d'un actionneur électromécanique 7 pour agir sur le piston de façon à presser la plaquette contre le disque, sur activation de cet actionneur 7. Cet actionneur 7 comprend un boîtier 8, ou carter, ayant une face de fixation 9, visible sur la figure 2, par laquelle il est destiné à être accouplé au corps d'étrier 1, et une face opposée 11 fermée par un couvercle 12. La face de fixation 9 et la face opposée 11 sont des faces sensiblement planes et parallèles l'une à l'autre.

Le boîtier 8 renferme différents composants formant un ensemble de motorisation 13 accouplé à un réducteur mécanique 14 qui permet de déplacer le piston lorsque ce réducteur 14 est accouplé au corps d'étrier 1, c'est-à-dire lorsque l'actionneur 7 est fixé à la base 2. Le réducteur 14 comporte une première double roue dentée 16 engrenée dans une deuxième double roue dentée 17, qui entraîne un train épicycloïdal 18.

L'ensemble de motorisation 13 comporte un moteur électrique 19 ayant un pignon de sortie 20, ainsi que deux cartes électroniques 21, 22 qui pilotent ce moteur 19. Les cartes et le moteur 19 sont portés par une plaque 23 fermant et se fixant dans une ouverture correspondante 24, cette ouverture débouchant dans la face de fixation 9 du boîtier 8. Comme visible sur la figure 2, les éléments du réducteur 14 tournent autour d'axes parallèles à l'axe de rotation du moteur, repéré par AM. Dans l'exemple des figures, l'axe AM est parallèle à un axe principal repéré par AX qui correspond à l'axe de translation du piston lorsque l'actionneur 7 est monté sur le corps d'étrier 1, cet axe AX s'étendant longitudinalement par rapport au véhicule équipé du frein.

Lorsque l'actionneur 7 est monté, le moteur 19 avec les cartes 21 et 22 sont en place dans la cavité correspondant à l'ouverture 24, et le pignon 20 entraîne la première double roue dentée 16. Le train épicycloïdal 18 comporte un élément d'accouplement 27, par exemple de type torx, qui débouche dans une ouverture correspondante 28 de la face de fixation 9, pour entraîner le mécanisme de transformation de mouvement logé dans la base 2. Par ailleurs, l'étrier peut comporter également, outre les moyens électromécaniques de déplacement du piston, des moyens hydrauliques de déplacement du piston. Dans ce cas, les moyens électromécaniques assurent le déplacement du piston dans le cas d'un freinage de parking, et les moyens hydrauliques assurent son déplacement en cas de freinage de service.

Lorsque l'actionneur 7 est mis en fonctionnement, les composants mobiles génèrent des vibrations qui sont notamment transmises au boitier 8 et au couvercle 12, produisant ainsi un bruit parasite.

De plus, de par leur conception, et notamment leurs tolérances dimensionnelles, le boitier 8 et le couvercle ne permettent pas de réaliser un positionnement suffisamment précis des axes de déplacement des composants mobiles par rapport à l'axe moteur AM.

Le document DE 10 2019 204181 A1 montre un actionneur électromécanique du type connu pourvu d'un boîtier avec couvercle, dans lequel un logement pour les axes du réducteur est formé.

L'invention a pour but de proposer un actionneur permettant de découpler les composants mobiles du boitier et du couvercle 12.

### EXPOSÉ DE L'INVENTION

L'invention a pour principal objet un actionneur électromécanique pour étrier de frein à disque de véhicule automobile comportant un boitier, un réducteur mécanique dont des composants du réducteur mécanique sont enfermés dans le boitier et un couvercle qui ferme une face d'extrémité, dans lequel certains composants du réducteur mécanique sont mobiles dans le boitier en déplacement autour de l'un ou l'autre de deux axes parallèles l'un à l'autre,

caractérisé en ce que il comporte au moins un élément d'ossature qui est relié à l'un du boitier ou du couvercle et qui réalise le guidage en rotation d'au moins un composant en déplacement autour d'un premier desdits deux axes et le guidage d'au moins un autre composant en déplacement autour de l'autre desdits deux axes.

Les composants mobiles de l'actionneur sont reliés entre eux par le ou les éléments d'ossature, rendant ainsi les composants mobiles indépendants du boitier ou du couvercle.

La conception du boitier et/ou du couvercle en est alors simplifiée.

De préférence, l'élément d'ossature comporte deux portées cylindriques dont chacune est coaxiale à l'un desdits deux axes et dont chaque portée cylindrique reçoit un arbre de guidage en rotation d'au moins un composant autour de l'axe qui lui est associé.

De préférence, au moins une portée cylindrique est formée par moulage autour de l'arbre qui lui est associé.

De préférence, l'élément d'ossature est logé dans une portion associée du couvercle, qui comporte deux renfoncements dans chacun desquels une extrémité axiale d'une portée cylindrique est reçue.

De préférence, l'élément d'ossature comporte une portion annulaire à denture intérieure, qui est coaxiale à l'un axe desdits deux axes et porte un arbre coaxial à l'autre axe desdits deux axes.

De préférence, l'élément d'ossature comporte une extension portant des moyens de guidage d'un arbre de sortie d'un moteur d'entrainement de l'actionneur électromécanique autour d'un troisième axe AM parallèle auxdits deux axes.

De préférence, l'élément d'ossature est monté à l'intérieur du boitier.

De préférence, les deux éléments d'ossature sont fixés l'un avec l'autre par emboîtement élastique.

L'invention a aussi pour objet un étrier de frein à disque de véhicule automobile, caractérisé en ce qu'il comporte un actionneur électromécanique selon l'une quelconque des revendications précédentes.

L'invention a aussi pour objet un frein à disque de véhicule automobile, caractérisé en ce qu'il comporte un étrier selon la revendication.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
[Fig. 1] est une vue d'ensemble, en perspective, d'un corps d'étrier de frein électromécanique représenté seul,
[Fig. 2] est une vue d'ensemble, éclatée, d'un actionneur électromécanique destiné à équiper un étrier,
[Fig. 3A] et [Fig. 3B] sont des représentations schématiques de l'actionneur montrant un élément d'ossature supérieur selon l'invention,
[Fig. 4A] et [Fig. 4B] sont des représentations schématiques en perspectives du couvercle associé à l'élément d'ossature supérieur représenté aux figures 3A et 3B,
[Fig. 5] est une section de l'actionneur comportant l'élément d'ossature supérieur et le couvercle qui lui est associé,
[Fig. 6A] et [Fig. 6B] sont des représentations en perspective d'un élément d'ossature supérieur et du couvercle associé qui sont réalisés selon une variante de réalisation de l'invention,
[Fig. 7A] et [Fig. 7B] sont des représentations schématiques de l'actionneur montrant un élément d'ossature inférieur selon l'invention,
[Fig. 8] est une représentation schématique en perspective d'une variante de réalisation de l'élément d'ossature inférieur,
[Fig. 9] est une vue en perspective d'un actionneur comportant un élément d'ossature supérieur et un élément d'ossature inférieur assemblés l'un avec l'autre,
[Fig. 10] est une représentation en perspective de l'élément d'ossature supérieur et l'élément d'ossature inférieur assemblés l'un avec l'autre.

### EXPOSÉ DÉTAILLÉ DE MODES DE RÉALISATION PARTICULIERS

Les figures 1 et 2 ont déjà été décrites précédemment dans la partie relative à l'état de la technique antérieure et au contexte technique de l'invention.

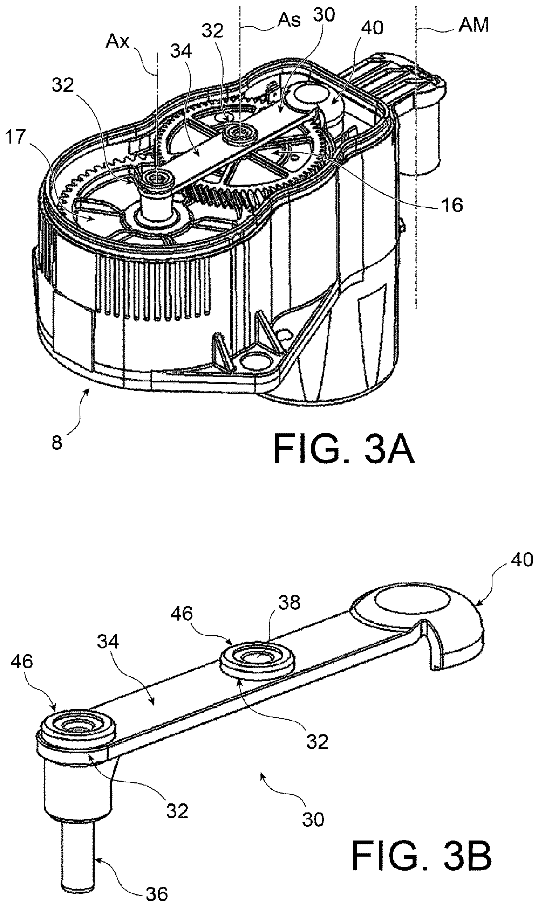

On a représenté aux figures 3A et 3B un actionneur électromécanique 7, qui comporte, comme décrit en référence à la figure 2, un boitier 8 dans lequel les composants d'un réducteur mécanique 14 sont agencés.

Ici, on peut voir une première double roue dentée 16, qui est mobile en rotation autour d'un axe secondaire AS parallèle à l'axe moteur AM et à l'axe principal AX qui correspond à l'axe de translation du piston et une deuxième double roue dentée 17 qui est mobile en rotation autour de l'axe principal AX.

### ELEMENT D'OSSATURE SUPERIEUR

L'actionneur électromécanique 7 comporte aussi un élément d'ossature supérieur 30, représenté plus en détails à la figure 3B, qui réalise le guidage des composants du réducteur 14 en déplacement autour de l'axe principal AX et de l'axe secondaire AS. Ainsi, l'élément d'ossature supérieur 30 réalise le guidage de la première roue dentée 16 en rotation autour de l'axe secondaire AS et il réalise le guidage de la deuxième double roue dentée 17 en rotation autour de l'axe principal AX.

L'élément d'ossature supérieur 30 permet aussi de positionner longitudinalement l'axe principal AX et l'axe secondaire AS l'un par rapport à l'autre.

L'élément d'ossature supérieur 30 comporte à cet effet deux portées cylindriques 32 dont chacune est associée et est coaxiale à l'axe secondaire AS ou à l'axe principal AX et une poutre longitudinale 34 reliant les portées cylindriques 32 l'une à l'autre.

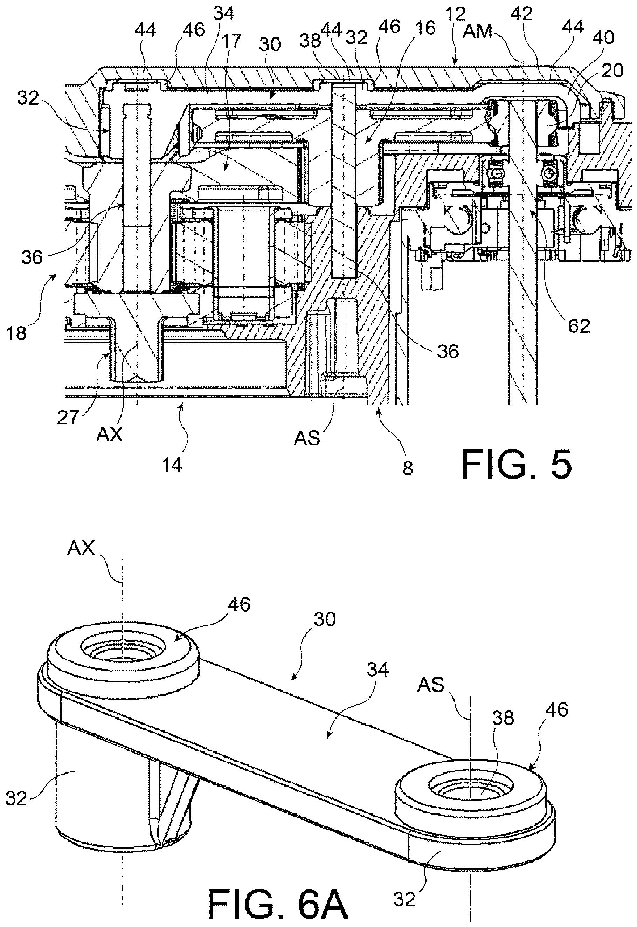

Comme on peut le voir à la figure 5, chaque double roue dentée 16, 17 tourne autour d'un arbre 36 coaxial à axe principal AX ou à l'axe secondaire AS.

Selon un mode de réalisation préféré, l'arbre 36 associé à l'une des doubles roues dentées 16, 17 et de préférence l'arbre 36 associé à la deuxième double roue dentée 17 est fixé à la portée cylindrique associée à l'axe principal AX.

A titre d'exemple non limitatif, la portée cylindrique 32 associée à l'axe principal AX est moulée autour de l'arbre 36. La portée cylindrique 32 associée à l'axe secondaire AS délimite un logement cylindrique 38 recevant une extrémité associée de l'arbre 36 associé à l'axe secondaire AS.

Selon le mode de réalisation représenté aux figures 3A et 3B, la poutre longitudinale 34 s'étend jusqu'à recouvrir le pignon de sortie 20, sans venir au contact avec celui-ci. Comme on peut le voir à la figure l'extrémité de la poutre longitudinale 34 s'étendant autour du pignon de sortie 20 forme un capot 40 qui, de préférence, vient en contact avec le boitier 8 pour participer au positionnement de l'élément d'ossature supérieur 30 par rapport au boitier 8.

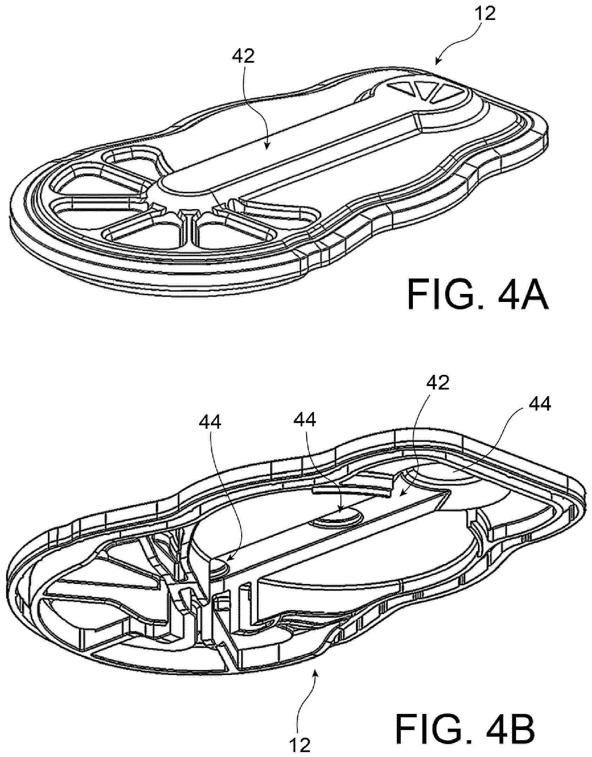

L'élément d'ossature supérieur 30, et en particulier sa poutre longitudinale 34 s'étend axialement au-dessus des doubles roues dentées 16, 17, de même que le couvercle 12. Comme on peut le voir aux figures 4A et 4B, le couvercle 12 comporte une portion bombée 42 qui est associée à l'élément d'ossature supérieur 30 et dans laquelle la poutre longitudinale 34 est logée. Cette portion bombée est ouverte axialement vers le volume intérieur du boitier 8 et comporte des renfoncements 44 cylindriques respectivement coaxiaux à l'axe moteur AM, à l'axe principal AX et à l'axe secondaire AS.

Chaque renfoncement reçoit une extrémité axiale d'une portée cylindrique 32. De préférence, un élément amortisseur 46, par exemple de forme annulaire, est reçu entre l'extrémité axiale d'une portée cylindrique 32 et le renfoncement 44, notamment pour amortir les vibrations.

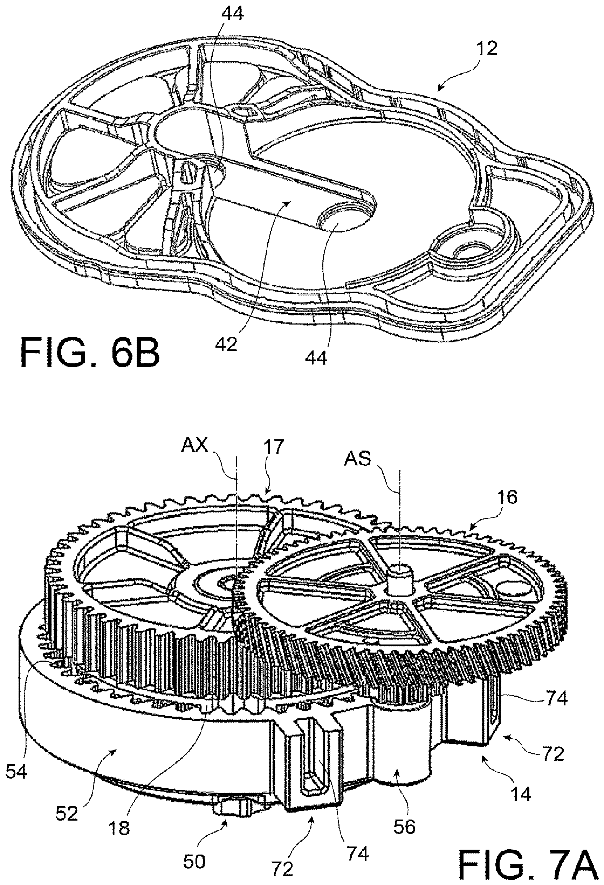

Selon une variante de réalisation représentée aux figure 6A et 6B, la poutre longitudinale 34 de l'élément d'ossature supérieur 30 s'étend longitudinalement uniquement entre l'axe principal AX et l'axe secondaire AS, c'est-à-dire que l'élément d'ossature supérieur 30 ne recouvre pas le pignon de sortie 20.

Le couvercle 12 comporte une portion bombée 42 formée en conséquence, c'est-à-dire qui comporte deux renfoncements 44 centrées sur l'axe principal AX et l'axe secondaire AS, respectivement et la portion bombée 42 s'étend longitudinalement entre les deux renfoncements 44.

### ELEMENT D'OSSATURE INFERIEUR

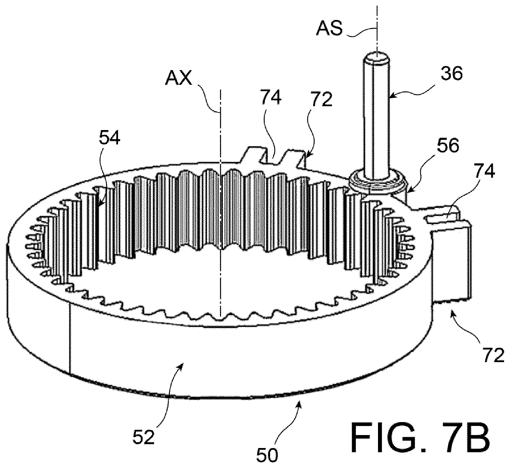

On a représenté aux figures 7A et suivantes une partie du réducteur mécanique 14 comportant un élément d'ossature inférieur 50 coopérant avec le train épicycloïdal 18 et l'arbre 36 associé à la première double roue dentée 16.

L'élément d'ossature inférieur 50 comporte une première portion annulaire 52 coaxiale à l'axe principal AX, qui comporte une denture intérieure 54.

Cette première portion annulaire 52 est destinée à coopérer avec le train épicycloïdal 18, et plus particulièrement avec les pignons satellites de celui-ci.

L'élément d'ossature inférieur 50 comporte une deuxième portion 56 coaxiale à l'axe secondaire AS qui est destinée à coopérer avec l'arbre 36 associé à la première double roue dentée 16.

De préférence l'arbre 36 associé à la deuxième double roue dentée 17 est fixé à la deuxième portion 56. A titre d'exemple non limitatif, la deuxième portion56 est moulée autour d'une extrémité inférieure de l'arbre 36.

Ainsi, la première portion annulaire 52 permet de maintenir le train épicycloïdal 18 coaxial à l'axe principal AX et l'élément d'ossature inférieur 50 permet par conséquent de positionner l'axe principal AX et l'axe secondaire AS l'un par rapport à l'autre.

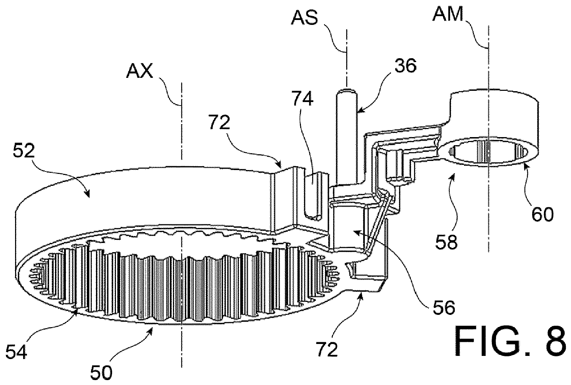

On a représenté à la figure 8 une variante de réalisation de l'élément d'ossature inférieur 50 qui comporte une extension 58 s'étendant longitudinalement jusqu'à l'axe moteur AM.

Cette extension 58 comporte un cylindre 60 coaxial à l'axe moteur AM qui est destiné à recevoir un organe de guidage de l'arbre de sortie 62 du moteur 19, tel qu'un roulement et qui est apte à être fixé au corps du moteur 19.

L'élément d'ossature inférieur 50 est arrangé à l'intérieur du boitier 8.

La paroi du boitier 8 est de préférence située à distance de l'élément d'ossature inférieur 50.

L'élément d'ossature inférieur 50 comporte des pattes 72 s'étendant radialement par rapport à l'axe principal AX qui sont portées par la portion annulaire 52.

Chaque patte 72 coopère avec une forme complémentaire de la paroi du boitier 8 pour réaliser un positionnement de l'élément d'ossature inférieur 50 dans le boitier 8.

Ici, chaque patte radiale 72 comporte une gorge 74 ouverte radialement vers l'extérieur et à son extrémité axiale supérieure, pour recevoir un bossage complémentaire, lorsque l'élément d'ossature inférieur 50 est introduit dans le boitier 8 selon un mouvement de translation axiale de bas vers le haut.

Chaque élément d'ossature 30, 50 permet isolément de guider deux composants du réducteur 14 en rotation autour de l'axe principal AX et autour de l'axe secondaire AS, il permet en outre de définir un positionnement correct des deux axes AX, AS l'un par rapport à l'autre.

Ainsi, un actionneur électromécanique peut comporter un seul de ces deux éléments d'ossature 30, 50, et il peut aussi comporter les deux éléments d'ossature 30, 50.

### ASSEMBLAGE DES DEUX ELEMENTS D'OSSATURE

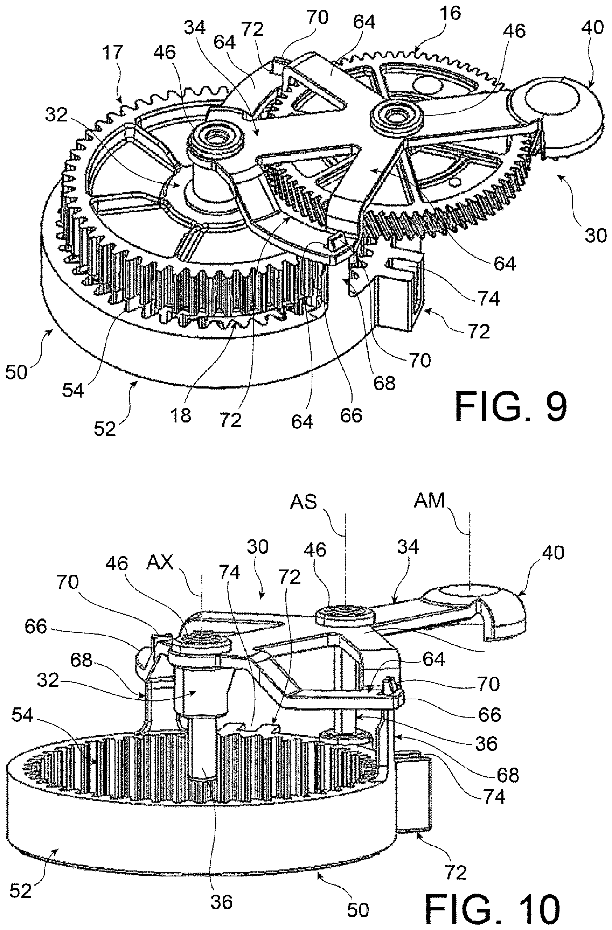

On a représenté aux figures 9 et 10 un exemple de réalisation du réducteur comportant l'élément d'ossature supérieur 30 et l'élément d'ossature inférieur 50.

Comme on l'a dit précédemment, chaque élément d'ossature 30, 50 permet isolément de définir le positionnement de l'axe principal AX et de l'axe secondaire AS l'un par rapport à l'autre.

Pour que la combinaison des deux éléments d'ossature 30, 50 continue de définir le positionnement des axes AX et AX l'un par rapport à l'autre, les deux éléments d'ossature 30, 50 comportent des moyens pour leur liaison et leur positionnement l'un par rapport à l'autre.

Le positionnement des éléments d'ossature l'un par rapport à l'autre s'effectue d'une part par le montage des composants du réducteur 14.

Le positionnement s'effectue notamment par le montage de l'arbre 36 associé à l'axe secondaire AS, qui est fixé, à son extrémité inférieure, à la deuxième portion 56 de l'élément d'ossature inférieur 50, et son extrémité supérieure est reçue dans le logement cylindrique 38 de la portée cylindrique 32 associée à l'axe secondaire AS de l'élément d'ossature supérieur 30.

Le positionnement s'effectue aussi par le montage de la deuxième double roue dentée 17 et du train épicycloïdal 18 sur l'arbre 36 associé à l'axe principal AX ainsi que par la coopération du train épicycloïdal 18 avec la denture intérieure 54 de la première portion annulaire 52 de l'élément d'ossature inférieur 50.

La liaison des deux éléments d'ossature 30, 50 l'un avec l'autre s'effectue de préférence par emboîtement élastique, c'est-à-dire par clipsage.

A cet effet, l'élément d'ossature supérieur 30 comporte des bras latéraux 64 qui s'étendent transversalement de part et d'autre de la poutre longitudinale 34 et dont l'extrémité libre des bras latéraux coopère avec des pieds de fixation 68 faisant partie de l'élément d'ossature inférieur 50.

Ici, l'élément d'ossature supérieur 30 comporte deux bras latéraux 64 situés de chaque côté de la poutre longitudinale 34. Une première extrémité des bras latéraux 64 est reliée à l'une des deux portées cylindriques 32 et les deux bras latéraux 64 se rejoignent à leurs extrémités libres pour former une platine 66 coopérant avec un pied de fixation 68. Chaque pied de fixation 68 est parallèle aux axe AM, AX, AS et s'étend axialement en direction de l'élément d'ossature supérieur 30 à partir de la première portion annulaire 52.

L'extrémité supérieure libre 70 de chaque pied de fixation 68 forme un crochet déformable élastiquement qui est reçu dans une ouverture 71 formée dans la platine 66 constituée par les extrémités libres des bras latéraux 64.

L'extrémité supérieure libre 70 de chaque pied de fixation 68 coopère avec la platine 66 constituée par les extrémités libres des bras latéraux 64 pour réaliser un blocage en mouvement axial des éléments d'ossature 30, 50 l'un par rapport à l'autre.

Ce blocage axial est réalisé d'une part par la forme en crochet de l'extrémité supérieure libre 70 de chaque pied de fixation 68, qui, en position d'assemblage, s'appuie contre une face supérieure de la platine et d'autre part par une butée axiale (non représentée) formée par le pied de fixation 68.

### REFERENCES

1 corps d'étrier
7 actionneur électromécanique
2 base
4 voûte
6 doigts
8 boitier
9 face de fixation
11 face opposée
12 couvercle
13 ensemble de motorisation
14 réducteur mécanique
16 première double roue dentée
17 deuxième double roue dentée
18 train épicycloïdal
19 moteur électrique
20 pignon de sortie
21, 22 : cartes électroniques
23 plaque
27 élément d'accouplement
30 élément d'ossature supérieur
32 portée cylindrique
34 poutre longitudinale
36 arbre
38 logement cylindrique
40 capot
42 portion bombée
44 renfoncement
46 élément amortisseur
50 élément d'ossature inférieur
52 première portion annulaire
54 denture intérieure
56 deuxième portion
58 extension
60 cylindre
62 arbre de sortie
72 patte radiale
74 gorge
64 bras latéraux
68 pied de fixation
66 platine
70 extrémité supérieure libre
AM axe moteur
AX axe principal
AS axe secondaire

## Revendications

1. Actionneur électromécanique (7) pour étrier de frein à disque de véhicule automobile comportant un boitier (8), un réducteur mécanique (14) dont des composants du réducteur mécanique (14) sont enfermés dans le boitier (8) et un couvercle (12) qui ferme une face d'extrémité, dans lequel certains composants (16, 17, 18) du réducteur mécanique (14) sont mobiles dans le boitier (8) en déplacement autour de l'un ou l'autre de deux axes (AX, AS) parallèles l'un à l'autre, l'actionneur électromécanique comportant au moins un élément d'ossature (30, 50) qui est relié à l'un du boitier (8) ou du couvercle (12) et qui réalise le guidage en rotation d'au moins un composant (16) en déplacement autour d'un premier (AS) desdits deux axes et le guidage d'au moins un autre composant (17, 18) en déplacement autour de l'autre (AX) desdits deux axes, l'élément d'ossature (30) comportant deux portées cylindriques (32) dont chacune est coaxiale à l'un desdits deux axes (AX, AS) et dont chaque portée cylindrique (32) reçoit un arbre (36) de guidage en rotation d'au moins un composant (16, 17, 18) autour de l'axe (AX, AS) qui lui est associé, **caractérisé en ce que** l'élément d'ossature (30) est logé dans une portion (42) associée du couvercle (12), qui comporte deux renfoncements (44) dans chacun desquels une extrémité axiale d'une portée cylindrique (32) est reçue.

2. Actionneur électromécanique (7) selon la revendication précédente, **caractérisé en ce qu'**au moins une portée cylindrique (32) est formée par moulage autour de l'arbre (36) qui lui est associé.

3. Actionneur électromécanique (7) selon la revendication 1, **caractérisé en ce que** l'élément d'ossature (50) comporte une portion annulaire (52) à denture intérieure (54), qui est coaxiale à l'un axe (AX) desdits deux axes et porte un arbre (36) coaxial à l'autre axe (AS) desdits deux axes.

4. Actionneur électromécanique (7) selon la revendication précédente, **caractérisé en ce que** l'élément d'ossature (50) comporte une extension (58) portant des moyens de guidage d'un arbre de sortie (62) d'un moteur (19) d'entrainement de l'actionneur électromécanique (7) autour d'un troisième axe (AM) parallèle auxdits deux axes (AX, AS).

5. Actionneur électromécanique (7) selon la revendication 3 ou 4, **caractérisé en ce que** l'élément d'ossature (50) est monté à l'intérieur du boitier (8).

6. Actionneur électromécanique (7) selon l'une quelconque des revendications 3 à 5, en combinaison avec l'une quelconque des revendications 1 ou 2, **caractérisé en ce que** les deux éléments d'ossature (30, 50) sont fixés l'un avec l'autre par emboîtement élastique.

7. Etrier de frein à disque de véhicule automobile, **caractérisé en ce qu'**il comporte un actionneur électromécanique (7) selon l'une quelconque des revendications précédentes.

8. Frein à disque de véhicule automobile, **caractérisé en ce qu'**il comporte un étrier selon la revendication 7.

## Patentansprüche

1. Elektromechanisches Stellglied (7) für einen Scheibenbremssattel eines Kraftfahrzeugs, umfassend ein Gehäuse (8), ein mechanisches Untersetzungsgetriebe (14), wobei die Komponenten des mechanischen Untersetzungsgetriebes (14) von dem Gehäuse (8) umschlossen sind, und einen Deckel (12), der eine Endseite verschließt, in der bestimmte Komponenten (16, 17, 18) des mechanischen Untersetzungsgetriebes (14) im Gehäuse (8) um eine von zwei zueinander parallelen Achsen (AX, AS) in der Verschiebung beweglich sind, wobei das elektromechanische Stellglied mindestens ein Rahmenelement (30, 50) umfasst, das entweder mit dem Gehäuse (8) oder dem Deckel (12) verbunden ist und das die Drehführung mindestens einer Komponente (16) bei der Verschiebung um eine erste (AS) der beiden Achsen und die Führung mindestens einer weiteren Komponente (17, 18) um die andere (AX) der beiden Achsen umsetzt, wobei das Rahmenelement (30) zwei zylindrische Lagerflächen (32) umfasst, von denen jede koaxial zu einer der beiden Achsen (AX, AS) ist und von denen jeder zylindrische Lagerfläche (32) eine Welle (36) zur Drehführung mindestens einer Komponente (16, 17, 18) um die ihr zugeordnete Achse (AX, AS) aufnimmt,
**dadurch gekennzeichnet, dass** das Rahmenelement (30) in einem dem Deckel (12) zugeordneten Abschnitt (42) untergebracht ist, der zwei Aussparungen (44) umfasst, in denen jeweils ein axiales Ende einer zylindrischen Lagerfläche (32) aufgenommen ist.

2. Elektromechanisches Stellglied (7) nach dem vorhergehenden Anspruch, **dadurch gekennzeichnet, dass** mindestens eine zylindrische Lagerfläche (32) durch Formen um die ihr zugeordnete Welle (36) herum gebildet wird.

3. Elektromechanisches Stellglied (7) nach Anspruch 1, **dadurch gekennzeichnet, dass** das Rahmenelement (50) einen ringförmigen Abschnitt (52) mit Innenverzahnung (54) umfasst, die koaxial zu einer Achse (AX) der beiden Achsen ist und eine Welle (36) trägt, die koaxial zur anderen Achse (AS) der beiden Achsen ist.

4. Elektromechanisches Stellglied (7) nach dem vorhergehenden Anspruch, **dadurch gekennzeichnet, dass** das Rahmenelement (50) eine Verlängerung (58) umfasst, die ein Mittel zur Führung einer Abtriebswelle (62) eines Antriebsmotors (19) für das elektromechanische Stellglied (7) um eine dritte Achse (AM) herum, die parallel zu den beiden Achsen (AX, AS) verläuft, trägt.

5. Elektromechanisches Stellglied (7) nach Anspruch 3 oder 4, **dadurch gekennzeichnet, dass** das Rahmenelement (50) im Inneren des Gehäuses (8) montiert ist.

6. Elektromechanisches Stellglied (7) nach einem der Ansprüche 3 bis 5, in Kombination mit einem der Ansprüche 1 oder 2, **dadurch gekennzeichnet, dass** die beiden Rahmenelemente (30, 50) durch elastisches Ineinandergreifen miteinander befestigt sind.

7. Scheibenbremssattel eines Kraftfahrzeugs, **dadurch gekennzeichnet, dass** er ein elektromechanisches Stellglied (7) nach einem der vorhergehenden Ansprüche umfasst.

8. Scheibenbremse eines Kraftfahrzeugs, **dadurch gekennzeichnet, dass** sie einen Bremssattel nach Anspruch 7 umfasst.

## Claims

1. An electromechanical actuator (7) for a motor vehicle disc brake calliper including a casing (8), a reducing gear (14) of which components of the reducing gear (14) are enclosed in the casing (8) and a cover (12) which closes an end face, wherein some components (16, 17, 18) of the reducing gear (14) are movable in the casing (8) moving about one or the other of two axes (AX, AS) which are parallel to each other, the electromechanical actuator including at least one frame element (30, 50) which is connected to one of the casing (8) or the cover (12) and which performs the guiding in rotation of at least one component (16) moving about a first axis (AS) of said two axes and the guiding of at least one other component (17, 18) moving about the other axis (AX) of said two axes, the frame element (30) including two cylindrical bearing surfaces (32) each of which is coaxial with one of said two axes (AX, AS) and of which each cylindrical bearing surface (32) receives a shaft (36) for guiding in rotation at least one component (16, 17, 18) about the axis (AX, AS) associated therewith,
**characterised in that** the frame element (30) is housed in an associated portion (42) of the cover (12), which includes two reinforcements (44) in each of which an axial end of a cylindrical bearing surface (32) is received.

2. The electromechanical actuator (7) according to the preceding claim, **characterised in that** at least one cylindrical bearing surface (32) is formed by moulding around the shaft (36) associated therewith.

3. The electromechanical actuator (7) according to claim 1, **characterised in that** the frame element (50) includes an annular portion (52) with internal gear (54), which is coaxial with one axis (AX) of said two axes and carries a shaft (36) coaxial with the other axis (AS) of said two axes.

4. The electromechanical actuator (7) according to the preceding claim, **characterised in that** the frame element (50) includes an extension (58) carrying means for guiding an output shaft (62) of a motor (19) for driving the electromechanical actuator (7) about a third axis (AM) which is parallel to said two axes (AX, AS).

5. The electromechanical actuator (7) according to claim 3 or 4, **characterised in that** the frame element (50) is mounted inside the casing (8).

6. The electromechanical actuator (7) according to any one of claims 3 to 5, in combination with any one of claims 1 or 2, **characterised in that** the two frame elements (30, 50) are fastened to each other by elastic interlocking.

7. A motor vehicle disc brake calliper, **characterised in that** it includes an electromechanical actuator (7) according to any one of the preceding claims.

8. A motor vehicle disc brake, **characterised in that** it includes a calliper according to claim 7.
